# EUROPÄISCHE PATENTANMELDUNG

(11) **EP 1 422 083 A2**
(43) Veröffentlichungstag der Anmeldung: **26.05.2004**
(21) Anmeldenummer: 03025884.2
(22) Anmeldetag: 12.11.2003
(51) Int. Cl.: B60H 1/00, B60H 1/34

(54) **Heizungs- und Belüftungs- oder Klimaanlage eines Kraftfahrzeuges mit zumindest einer Luftauslassdüse**

(30) Priorität: 23.11.2002 DE 10254707
(71) Anmelder: ADAM OPEL AG, 65423 Rüsselsheim (DE)
(72) Erfinder: Wittorf, Marten, 55218 Ingelheim (DE)

(57) **Zusammenfassung**

Eine Heizungs- und Belüftungs- oder Klimaanlage eines Kraftfahrzeuges umfasst zumindest eine Luftauslassdüse mit einem an eine Zuluftleitung (4) angeschlossenes Düsengehäuse (2) und einem im Düsengehäuse (2) schubfachartig verschiebbar gelagerten, nach oben offenen Düseneinsatz (3) zur Aufnahme mindestens eines Behälters (17). Ein der oberen Öffnung (16) des Düseneinsatzes (3) gegenüberliegender Boden (12) ist als Abstellfläche für den Behälter (17) eben ausgebildet und zur Umströmung des Behälters (17) mit temperierter Luft haben seitliche Luftleitwände (5, 6) des Düseneinsatzes (3) zumindest im Bereich der Öffnung (16) einen Abstand voneinander, der größer als der Durchmesser der Öffnung (16) ist.

## Beschreibung

Die Erfindung bezieht sich auf eine Heizungs- und Belüftungs- oder Klimaanlage eines Kraftfahrzeuges mit zumindest einer Luftauslassdüse, die ein an eine Zuluftleitung angeschlossenes Düsengehäuse und einen im Düsengehäuse schubfachartig verschiebbar gelagerten, nach oben offenen Düseneinsatz zur Aufnahme mindestens eines Behälters umfasst.

Aus der DE 90 06 623 U1 ist es bekannt, eine Halterung zum Kühlen von Behältern mit Getränken an einem Belüftungsgitter einer Luftauslassdüse einer Heizungs- und Belüftungs- oder Klimaanlage eines Kraftfahrzeuges zu befestigen. Die Halterung besteht aus einem gebogenen eine Aufnahme für den Behälter bildenden Draht und wird so angebracht, dass der Behälter dem aus dem Belüftungsgitter austretenden Luftstrom ausgesetzt ist. Auf diese Weise wird dem Wunsch von Fahrzeuginsassen Rechnung getragen, auch im Sommer während langer Fahrten gekühlte Getränke genießen zu können. Bei Bedarf wird die Halterung in das Belüftungsgitter eingehängt. Besteht jedoch kein Bedarf, stört die Halterung und muss verstaut werden.

Nach der Offenbarung der EP 0 865 962 A1 versucht man dem Problem dadurch Rechnung zu tragen, indem ein kühlbarer Behälter in einem Handschuhfach eines Kraftfahrzeuges angeordnet und diesem Behälter ein temperierbarer Luftstrom einer Klimaanlage des Kraftfahrzeuges zugeführt wird. Dies ist jedoch aufwendig und der Behälter beansprucht anderweitig benötigten Platz im Handschuhfach.

Eine mit der EP 0 865 962 A1 vergleichbare Lösung ist in der DE 298 01 464 U1 beschrieben. Dort ist ein einem Luftstrom aussetzbarer Behälter in einer Armlehne eines Kraftfahrzeuges angeordnet. In der Armlehne ist ein Schubfach mit einer Behälterhalterung vorgesehen. Dem Behälter wird temperierte Luft einer Heizungs- und Belüftungs- oder Klimaanlage eines Kraftfahrzeuges zugeführt. Auch hier ist jedoch der Aufwand für die Luftzuführung hoch und der Stauraum in der Armlehne, der heute oft anderweitig benötigt wird, ist belegt.

Die JP 0 90 02 057 A zeigt eine Luftauslassdüse einer Belüftungsanlage eines Kraftfahrzeuges, die ein an eine Zuluftleitung angeschlossenes Düsengehäuse und einen im Düsengehäuse gelagerten Düseneinsatz umfasst. Der Düseneinsatz besteht im Wesentlichen aus einem rinnenförmigen Lagerteil und einem mit diesem schwenkbeweglich verbundenen Frontlagerteil. In einer ersten Stellung bilden das Lagerteil und das Frontlagerteil innerhalb der Luftauslassdüse eine Lagerwanne für eine liegende Getränkedose. In einer zweiten Stellung ist das Lagerteil aus der Luftauslassdüse herausgezogen und das Frontlagerteil derart verschwenkt, dass es zur Lagerung einer stehenden Getränkedose dient. Der Düseneinsatz ist insofern nachteilig, als er zum einen mehrere bewegliche Teile, nämlich das schubladenartige Lagerteil und das daran angelenkte Frontlagerteil, umfasst und zum anderen eine unzureichende Temperierung der Getränkedose bewirkt, da die Luftströmung bei aus der Luftauslassdüse heruasgezogenem Lagerteil und davon abgeklapptem Frontlagerteil im Wesentlichen ungerichtet in das Innere des Kraftfahrzeuges gelangt

Es ist Aufgabe der Erfindung, eine Heizungs- und Belüftungs- oder Klimaanlage eines Kraftfahrzeuges der eingangs genannten Art zu schaffen, die bei einem einfachen platzsparenden Aufbau eine zuverlässige Temperierung des Behälters sicherstellt.

Zur Lösung dieser Aufgabe zeichnet sich eine Heizungs- und Belüftungs- oder Klimaanlage eines Kraftfahrzeuges mit zumindest einer Luftauslassdüse durch die im Patentanspruch 1 angegebenen Merkmale aus. Weitere Einzelheiten der Erfindung ergeben sich aus den Patentansprüchen 2 bis 10.

Nach dem Herausziehen des Düseneinsatzes aus dem Düsengehäuse der Luftauslassdüse befindet sich die obere Öffnung des Düseneinsatzes im Freien und der der Öffnung gegenüberliegende Boden dient als Abstellfläche für den Behälter. Der in den Düseneinsatz gestellte Behälter wird umfangsseitig von der temperierten Luft umströmt, da seitliche Luftleitwände des Düseneinsatzes zumindest im Bereich der Öffnung einen Abstand voneinander haben, der größer als der Durchmesser der Öffnung ist und die Luft den Düseneinsatz frontseitig (durch Luftleitelemente gerichtet) verlässt, weshalb eine zuverlässige Temperierung des Behälters sicherstellt ist. Der Boden kann, wie auch der Rand der Öffnung, aus einem geräuschdämpfenden Material bestehen. Der Rand der Öffnung kann auch etwas breiter flexibel ausgeführt sein, so dass er an einem eingesetzten Behälter dichtend anliegt. Da die Lüftungsdüse Bestandteil einer Heizungs- und Belüftungs- oder Klimaanlage ist, kann der Behälter kalter oder warmer Luft ausgesetzt werden. Befindet sich in dem Behälter (Getränkedose) ein Getränk, kann es gekühlt werden, handelt es sich bei dem Behälter jedoch beispielsweise um ein Glas mit Babynahrung, ist auch die Erwärmung der Nahrung möglich.

Von besonderem Vorteil ist es, wenn der nach oben zur Aufnahme von Behältern offene Düseneinsatz eine runde obere Öffnung aufweist, die etwa den Durchmesser einer handelsüblichen Getränkedose bzw. eines Babynahrungsglases hat. In diesem Fall können derartige Behälter sicher durch die Öffnung in den herausgezogenen Düseneinsatz hineingestellt werden, ohne dass die Gefahr des Herausfallens besteht.

Da nicht auszuschließen ist, dass der Düseneinsatz durch den Behälterinhalt verschmutzt wird, ist es von Vorteil, wenn der Düseneinsatz aus dem Düsengehäuse entnehmbar ist. So ist eine unproblematische Reinigung möglich. Die Entnahme des Düseneinsatzes sollte jedoch nur nach einem Entsichern möglich sein. Ist ein Sperrelement zum Sichern des Düseneinsatzes im Düsengehäuse vorhanden, kann es nicht unbeabsichtigt aus diesem herausfallen.

Des Weiteren ist der Düseneinsatz bevorzugt nur gegen die Kraft einer Feder aus dem Düseneinsatz herauszuziehen. Befindet sich kein Behälter im Düseneinsatz, schließt er sich so nach leichter Überwindung einer Verrastung selbsttätig und wird klapperfrei in der geschlossenen Position gehalten.

Das Düsengehäuse, welches beispielsweise in eine Armaturentafel eines Kraftfahrzeuges eingesetzt oder Bestandteil dieser ist, ist in einem hinteren Bereich, wie üblich, an eine Zuluftleitung angeschlossen. Über diese wird dem Düsengehäuse von der Heizungs- und Belüftungsoder Klimaanlage einstellbar temperierte Luft zugeführt. Der Düseneinsatz ist mit seitlich geschlossenen Luftleitwänden ausgestattet und in seinem hinteren Bereich, der der Zuluftleitung nahe ist, offen. Er ist ebenfalls in seinem vorderen Bereich offen, wobei dort jedoch, wie an sich bekannt, feste oder verstellbare Luftleitelemente angeordnet sind.

Notwendigerweise ist die vertikale Querschnittskontur des Düseneinsatzes zur Gewährleistung der Schubfachfunktion auf die Querschnittskontur des Düsengehäuses abgestimmt. Bevorzugt befindet sich in einem Spalt zwischen Innenwandungen des Düsengehäuses und Außenwandungen des Düseneinsatzes eine Dichtung. Diese verhindert, dass Luft ungerichtet und ohne den Behälter zu temperieren durch den Spalt hindurchtritt.

Als zusätzliches Bauelement kann ein spezieller Aufnahmebehälter, welcher in die Öffnung des Düseneinsatzes einsetzbar ist, mit dem Fahrzeug mitgeliefert werden. Er könnte luftdicht oder luftdurchlässig in der Öffnung verrastet werden. Von Vorteil wäre, wenn der Behälter nur so tief in den Düseneinsatz hineinragt, dass zwischen seinem Boden und dem Boden des Düseneinsatzes ein Spalt verbleibt. So würde der eingesetzte Aufnahmebehälter auch von unten von temperierter Luft umspült werden. Der Aufnahmebehälter könnte, insbesondere im Sommer, zur Temperierung von kleinem Stückgut, wie beispielsweise Schokolade dienen, was den Nutzwert der Erfindung weiter erhöht.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Weitere Einzelheiten der Erfindung ergeben sich aus der folgenden Beschreibung eines Ausführungsbeispiels. Von den zugehörigen Zeichnungen zeigt:
- Fig. 1: eine Darstellung einer erfindungsgemäßen Luftauslassdüse in einem Ausschnitt einer Armaturentafel eines Kraftfahrzeuges und
- Fig. 2: eine Darstellung eines Düseneinsatzes der Luftauslassdüse nach Fig. 1.

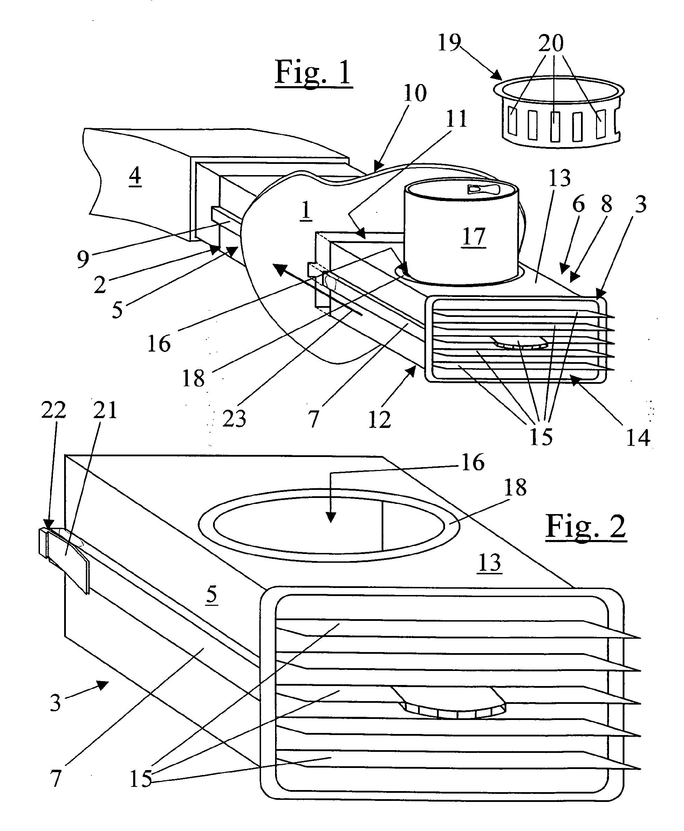

Wie aus Fig. 1 ersichtlich, befindet sich in einer Armaturentafel 1 eines Kraftfahrzeugs ein Düsengehäuse 2 einer Luftauslassdüse, welche aus dem Düsengehäuse 2 und einem Düseneinsatz 3 besteht. An einem hinteren Bereich des Düsengehäuses 2 ist eine Zuluftleitung 4 einer Heizungs- und Belüftungs- oder Klimaanlage des Kraftfahrzeuges angeschlossen. Je nach an dieser Anlage vorgewählter Temperatur und Gebläsestufe kann dem Düsengehäuse 2 so erwärmte oder abgekühlte Luft zugeführt werden.

In dem hinteren Bereich des Düsengehäuses 2 kann eine Absperrklappe vorgesehen sein, mit der der Luftstrom, wie aus dem Stand der Technik bekannt, zu drosseln oder ganz abzustellen ist. Dies ist in den Zeichnungen jedoch nicht verdeutlicht.

Der Düseneinsatz 3 kann schubfachartig in das Düsengehäuse 2 eingesetzt und in diesem verschoben werden. Dazu sind an geschlossenen Seitenwänden 5, 6 des Düsengehäuses 2 Führungen 7, 8 vorgesehen, wobei im Düsengehäuse 2 Gegenführungen 9, 10 angeordnet sind. Ist der Düseneinsatz 3 vollständig in das Düsengehäuse 2 eingeschoben, ist die Luftauslassdüse äußerlich nicht von bekannten Luftauslassdüsen zu unterscheiden. Die dem Düsengehäuse 2 über die Zuluftleitung 4 zugeführte Luft gelangt durch eine hintere offene Seite 11 des Düseneinsatzes 3 in den von den Seitenwänden 5, 6, einem Boden 12 sowie einer oberen Wandung 13 gebildeten Raum und kann durch eine vordere offene Seite 14 des Düseneinsatzes 3 in den Kraftfahrzeuginnenraum ausströmen. Zur Festlegung der Strömungsrichtung sind in der vorderen offenen Seite 14 des Düseneinsatzes 3, wie an sich bekannt, verschwenkbare Lamellen 15 angeordnet.

Zwischen den Innenseiten der Wandungen des Düsengehäuses 2 und Außenseiten der Wandungen 5, 6, 12, 13 des Düseneinsatzes 3 kann eine Dichtung angeordnet sein. Diese verhindert, dass Luft ungerichtet durch einen Spalt zwischen Düsengehäuse 2 und Düseneinsatz 3 austreten kann.

Die obere Wandung 13 des Düseneinsatzes 3 weist eine Öffnung 16 auf, durch die bei herausgezogenem Düseneinsatz 3 ein. Behälter 17 (hier Getränkedose) in den Düseneinsatz 3 hineingestellt werden kann. Ein Randbereich der Öffnung 16 ist mit elastischem Material 18 verkleidet. So sitzt der Behälter 17 eng in der Öffnung 16 und steht auf dem Boden 12 des Düseneinsatzes 3. Je nach Temperatureinstellung wird der Behälter 17 nunmehr gewärmt oder gekühlt. Es besteht somit eine Möglichkeit, beispielsweise für gewärmte Babynahrung oder für gekühlte Getränke zu sorgen, wobei der bauliche Aufwand hierfür gering ist und kein anderweitig benötigter Stauraum verbraucht wird.

An Stelle eines Behälters 17 kann auch ein Aufnahmebehälter 19 in die Öffnung 16 eingesetzt werden. Der Aufnahmebehälter 19 kann Öffnungen 20 aufweisen, so dass er luftdurchlässig ist. Er kann jedoch auch geschlossen ausgeführt sein. Der Aufnahmebehälter 19 sitzt klapperfrei in der Öffnung 16, was durch das elastische Material 18 gewährleistet ist. Er ist jedoch flacher als der Düseneinsatz 3 ausgeführt, steht also im eingesetzten Zustand nicht auf dem Boden 12 des Düseneinsatzes 3, sondern hat einen Abstand zu diesem. So ist gewährleistet, dass Luft auch unter dem eingesetzten Aufnahmebehälter 19 hindurchströmt und er bzw. sein Inhalt (beispielsweise zu kühlende Schokolade) gut temperiert wird.

Dadurch, dass die Seitenwände 5, 6 des Düseneinsatzes 3 einen größeren Abstand voneinander aufweisen, als der Durchmesser der Öffnung 16, ist garantiert, dass die dem Düseneinsatz 3 über die Zuluftleitung 4 zugeführte Luft auch bei im Düseneinsatz 3 befindlichem Behälter 17 oder Aufnahmebehälter 19 aus der vorderen offenen Seite 14 des Düseneinsatzes 3 austreten kann. Der Behälter 17 oder der Aufnahmebehälter 19 verschließt also den Düseneinsatz 3 nicht vollständig.

Der Düseneinsatz 3 kann, wie in Fig. 1 gezeigt, komplett aus dem Düsengehäuse 2 entnommen werden. So kann er beispielsweise zu Reinigungszwecken aus dem Kraftfahrzeug entfernt werden. Um zu gewährleisten, dass der Düseneinsatz 3 nicht selbsttätig aus dem Düsengehäuse 2 herausfällt, ist ein in Fig. 2 andeutungsweise gezeigtes Sperrelement 21 vorgesehen. Es handelt sich dabei um ein federndes Kunststoffelement mit Rastnase 22. Bei eingesetztem Düseneinsatz 3 sorgt das Sperrelement 21 für einen klapperfreien Sitz im Düsengehäuse 2. Wird der Düseneinsatz 3 herausgezogen, hintergreift die Rastnase 22 eine Kante der Armaturentafel 1, womit ein weiteres Herausziehen oder Herausfallen verhindert ist. Erst wenn das Sperrelement 21 bei herausgezogenem Düseneinsatz 3 von Hand entsichert wird, kann der Düseneinsatz 3 vollständig aus dem Düsengehäuse 2 entnommen werden.

Es kann vorgesehen sein, dass der Düseneinsatz 3 entgegen der Kraft einer Feder in dem Düsengehäuse 2 verschiebbar ist, was jedoch nicht in den Zeichnungen verdeutlicht ist. Die Feder sollte den Düseneinsatz 3 in Richtung des Pfeils 23 mit einer Kraft beaufschlagen, womit ein sicherer Sitz des Düseneinsatzes 3 in seiner geschlossenen Position gewährleistet wäre. Für verschiedene geöffnete Positionen des Düseneinsatzes 3 sollten dann Raststellungen vorgesehen sein, zu deren Überwindung die Federkraft nicht ausreicht.

Der Luftauslassdüse der Heizungs- und Belüftungsoder Klimaanlage kommt somit eine neue Funktion zu. Der Düseneinsatz 3 dient als Dosenhalter. Wird keine Luft durch den Düseneinsatz 3 gefördert, kann dieser zur Aufnahme von kleinen Behältern 17 oder Aufnahmebehältern 19 dienen. Bei entsprechender Einstellung der Heizungs- und Belüftungs- oder Klimaanlage kann der Behälterinhalt jedoch zusätzlich in gewünschter Weise temperiert werden. Für die Fahrzeuginsassen ist damit eine Komfortverbesserung verbunden, ohne dass Einbußen beim sonstigen vorhandenen Stauraum im Fahrzeug hinzunehmen sind.

### Bezugszeichenliste

- 1: Armaturentafel
- 2: Düsengehäuse
- 3: Düseneinsatz
- 4: Zuluftleitung
- 5, 6: Seitenwände des Düseneinsatzes
- 7, 8: Führungen
- 9, 10: Gegenführungen
- 11: hintere offene Seite des Düseneinsatzes
- 12: Boden des Düseneinsatzes
- 13: obere Wandung des Düseneinsatzes
- 14: vordere offene Seite des Düseneinsatzes
- 15: verschwenkbare Lamellen
- 16: Öffnung
- 17: Behälter (Getränkedose)
- 18: elastisches Material am Rand der Öffnung
- 19: Aufnahmebehälter
- 20: Öffnungen im Aufnahmebehälter
- 21: Sperrelement
- 22: Rastnase des Sperrelementes
- 23: Pfeil für Federkraftrichtung

## Patentansprüche

1. Heizungs- und Belüftungs- oder Klimaanlage eines Kraftfahrzeuges mit zumindest einer Luftauslassdüse, die ein an eine Zuluftleitung (4) angeschlossenes Düsengehäuse (2) und einen im Düsengehäuse (2) schubfachartig verschiebbar gelagerten, nach oben offenen Düseneinsatz (3) zur Aufnahme mindestens eines Behälters (17) umfasst, **dadurch gekennzeichnet, dass** ein der oberen Öffnung (16) des Düseneinsatzes (3) gegenüberliegender Boden (12) als Abstellfläche für den Behälter (17) eben ausgebildet ist und zur Umströmung des Behälters (17) mit temperierter Luft seitliche Luftleitwände (5, 6) des Düseneinsatzes (3) zumindest im Bereich der Öffnung (16) einen Abstand voneinander haben, der größer als der Durchmesser der Öffnung (16) ist.

2. Heizungs- und Belüftungs- oder Klimaanlage nach Anspruch 1, **dadurch gekennzeichnet, dass** die obere Öffnung (16) des Düseneinsatzes (3) rund ist und etwa den Durchmesser einer Getränkedose/-flasche bzw. eines Babynahrungsglases hat.

3. Heizungs- und Belüftungs- oder Klimaanlage nach Anspruch 1 oder 2, **dadurch gekennzeichnet, dass** der Düseneinsatz (3) aus dem Düsengehäuse (2) herausnehmbar und abwaschbar ist.

4. Heizungs- und Belüftungs- oder Klimaanlage Anspruch 3, **dadurch gekennzeichnet, dass** das Entnehmen des Düseneinsatzes (3) aus dem Düsengehäuse (2) nur nach Entsichern eines Sperrelementes (21) möglich ist.

5. Heizungs- und Belüftungs- oder Klimaanlage nach einem der Ansprüche 1 bis 4, **dadurch gekennzeichnet, dass** der Düseneinsatz (3) gegen die Kraft einer Feder in einer geschlossenen Position gehalten und in eine geöffnete Position aus dem Düsengehäuse (2) ausziehbar ist und in dieser geöffneten Position verrastbar ist.

6. Heizungs- und Belüftungs- oder Klimaanlage nach einem der Ansprüche 1 bis 5, **dadurch gekennzeichnet, dass** die Luftleitwände (5, 6) seitlich geschlossen sind und der Düseneinsatz (3) in einem hinteren Bereich nahe der Zuluftleitung (4) sowie in einem vorderen Luftauslassbereich offen ausgebildet ist, wobei in dem Luftauslassbereich feste oder verstellbare Luftleitelemente (Lamellen 15) angeordnet sind.

7. Heizungs- und Belüftungs- oder Klimaanlage nach einem der Ansprüche 1 bis 6, **dadurch gekennzeichnet, dass** sich in einem Spalt zwischen Innenwandungen des Düsengehäuses (2) und Außenwandungen des verschiebbaren Düseneinsatzes (3) eine Dichtung befindet.

8. Heizungs- und Belüftungs- oder Klimaanlage nach einem der Ansprüche 1 bis 7, **dadurch gekennzeichnet, dass** in die Öffnung (16) des Düseneinsatzes (3) ein Aufnahmebehälter (19) einsetzbar ist.

9. Heizungs- und Belüftungs- oder Klimaanlage nach Anspruch 8, **dadurch gekennzeichnet, dass** der Aufnahmebehälter (19) luftdicht oder luftdurchlässig ausgebildet und in der Öffnung (16) verrastbar ist.

10. Heizungs- und Belüftungs- oder Klimaanlage nach Anspruch 8 oder 9, **dadurch gekennzeichnet, dass** zwischen einer unteren Begrenzung des in den Düseneinsatz (3) eingesetzten Aufnahmebehälters (19) und dem Boden (12) des Düseneinsatzes (3) ein Luftspalt verbleibt.
